# EUROPÄISCHE PATENTSCHRIFT

(11) **EP 1 496 602 B1**
(45) Veröffentlichungstag und Bekanntmachung des Hinweises auf die Patenterteilung: **16.01.2008**
(21) Anmeldenummer: 04010889.6
(22) Anmeldetag: 07.05.2004
(51) Int. Cl.: H02K 9/06, H02K 9/28, H02K 5/167, H02K 5/14

(54) **Elektrische Maschine mit Gleitlagerung und Anlaufscheibe**
Electric machine with sliding-contact bearing and thrust washer
Machine électrique avec palier à glissement et disque de démarrage

(30) Priorität: 07.07.2003 DE 10330614
(43) Veröffentlichungstag der Anmeldung: 12.01.2005
(73) Patentinhaber: ROBERT BOSCH GMBH, 70442 Stuttgart (DE)
(72) Erfinder: Rupp, Bernhard, 75056 Sulfeld (DE)

(56) Entgegenhaltungen:
- EP-A- 0 556 416
- AU-B2- 451 616
- DE-A1- 2 533 283
- DE-A1- 2 910 845
- DE-C- 876 868
- US-A- 3 302 047
- US-A- 3 818 255
- US-A1- 2002 182 020
- PATENT ABSTRACTS OF JAPAN Bd. 1997, Nr. 07, 31. Juli 1997 (1997-07-31) -& JP 09 084320 A (ZEXEL CORP), 28. März 1997 (1997-03-28)
- PATENT ABSTRACTS OF JAPAN Bd. 013, Nr. 142 (E-739), 7. April 1989 (1989-04-07) -& JP 63 302747 A (HITACHI LTD), 9. Dezember 1988 (1988-12-09)

## Beschreibung

### Stand der Technik

Die Erfindung geht aus von einer elektrischen Maschine mit einer Anlaufscheibe nach dem Oberbegriff des Patentanspruchs 1. Eine derartige Anlaufscheibe ist auf einer Welle zwischen einem Gleitlager und einem von Bürsten beaufschlagten, rotierenden elektrischen Kommutator angeordnet und liegt an dem Gleitlager und dem Kommutator an. Um eine Kühlung zu erzielen sind viele Maßnahmen bekannt, wie beispielsweise ein Lüfterrad vorzusehen. Dies stellt aber ein zusätzliches Bauteil dar, das außerdem die Baulänge erhöht.

Die DE 2533283 A1 der nächstliegende Stand der Technik, zeigt einen Elektromotor mit einer Anlaufscheibe, die zwischen einem Kollektor und einem Kalottengleitlager angeordnet ist. Dabei ist die Anlaufscheibe einerseits formschlüssig axial in entsprechende Rastnasen des Kollektors axial eingefügt und greift andererseits in eine Bohrung einer Abdeckhaube ein, mittels derer das Kalottenlager über die Klemmbrille im Lagerschild verstemmt ist.

### Vorteile der Erfindung

Die erfindungsgemäße elektrische Maschine mit der Anlaufscheibe mit den kennzeichnenden Merkmalen des Patentanspruchs 1 hat den Vorteil, dass die Baulänge nicht erhöht wird und außerdem kein zusätzliches Bauteil notwendig ist. Hierzu ist eine Anlaufscheibe vorgesehen, die auf einer Welle zwischen einem Gleitlager und einem von Bürsten beaufschlagten, rotierenden elektrischen Kommutator angeordnet ist, wobei die Anlaufscheibe an dem Gleitlager und dem Kommutator anliegt und wobei am Außenumfang der Anlaufscheibe Lüfterschaufeln ausgebildet sind. Vorzugsweise erzeugen die Lüfterschaufeln einen im wesentlichen axialen Luftstrom. In einer bevorzugten Ausführungsform weist die Anlaufscheibe eine Ölrückführ-Einrichtung auf. Es ist vorteilhaft, die Anlaufscheibe als ein Kunststoffformteil auszubilden, da somit die Lüfterschaufeln leicht integriert werden können.

Eine elektrische Maschine mit einer derartigen Anlaufscheibe kann kürzer aufbauen und muss kein zusätzliches Lüfterrad haben. Vorzugsweise hat die Anlaufscheibe auf der Welle einen Presssitz. Vorteilhaft ist, wenn der Kommutator vom Luftstrom der Lüfterschaufeln beaufschlagt wird. Ein weiterer vorteilhafter Kühlungseffekt ergibt sich, wenn Bürstenköcher und/oder Befestigungslaschen der Bürstenköcher von diesem Luftstrom beaufschlagt werden.

Weitere Vorteile und vorteilhafte Weiterbildungen ergeben sich aus den Unteransprüchen und der Beschreibung.

### Zeichnung

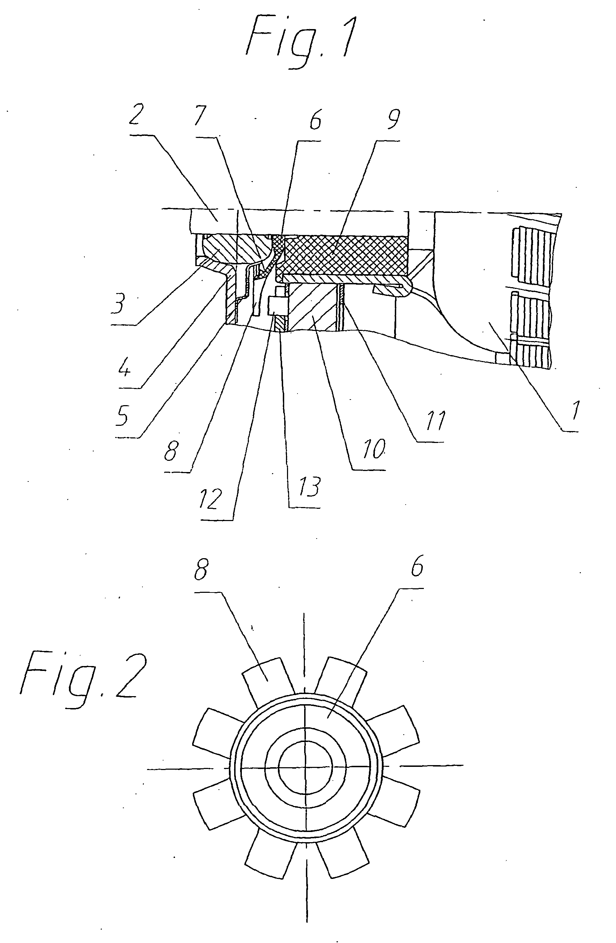

Ein Ausführungsbeispiel ist in der Zeichnung dargestellt und in der nachfolgenden Beschreibung näher erläutert. Es zeigen Figur 1 eine elektrische Maschine in einem Längsschnitt und Figur 2 eine Anlaufscheibe in einer Vorderansicht.

### Beschreibung des Ausführungsbeispiels

In der Figur 1 ist ein Teil einer rotierende elektrische Maschine vereinfacht in einem Längsschnitt dargestellt. Die elektrische Maschine kann ein Elektromotor sein, der in einem Kraftfahrzeug beispielsweise in einem Fensterheber, Wischerantrieb etc. verwendet wird. Es kann sich jedoch auch um einen Generator handeln.

Die elektrische Maschine weist einen bewickelten Anker 1 auf, der auf einer Welle 2 angeordnet ist. Die Welle 2 ist gelagert, wobei nur ein Lager 3 dargestellt ist. Im vorliegenden Ausführungsbeispiel handelt es sich bei dem Lager 3 um ein gesintertes Kalottenlager beziehungsweise Gleitlager, das mit Öl getränkt ist. Das Lager 3 ist in einem Lagerschild 4 der elektrischen Maschine angeordnet und über eine Federscheibe 5 axial fixiert. Zwischen dem Lager 3 und einem Kommutator 9 ist auf der Welle 2 eine Anlaufscheibe 6 angeordnet, die mit ihren Stirnseiten am Lager 3 und dem Kommutator 9 anliegt. Die Anlaufscheibe 6 kennzeichnet sich dadurch, dass sich die Welle 2 über den Kommutator 9 axial an ihr abstützt. Die Anlaufscheibe wiederum liegt am Lager 3 an.

Bei dem Kommutator handelt es sich um ein von Bürsten 10, die in Bürstenköchem 11 geführt sind, die wiederum über Befestigungslaschen 12 an einem Bürstenträger 13 der elektrischen Maschine befestigt sind, beaufschlagtes, rotierendes elektrisches Kontaktelement.

Die Anlaufscheibe 6 ist vorzugsweise ein Kunststoff-Formteil und weist eine Ölrückführ-Einrichtung 7 für das Öl im Lager 3 auf. Hierzu erstrecht sie sich haubenförmig über die ihr zugewandte Stirnseite des Lagers 3 und weist am Rand eine umlaufende nach innen gerichtete Nase auf. Dadurch kann das Öl wieder zurückgeführt werden.

Am Außenumfang der Anlaufscheibe 6 sind Lüfterschaufeln 8 ausgebildet. Es handelt sich, wie insbesondere auf Figur 2 hervorgeht, um acht gleichmäßig am Umfang verteilte Lüfterschaufeln, wobei auch eine andere Anzahl vorgesehen sein kann.

Vorzugsweise sind die Lüfterschaufeln 8 so ausgebildet, dass sie einen im wesentlichen axialen Luftstrom erzeugen. Dabei wird der Kommutator 9 vom Luftstrom der Lüfterschaufeln beaufschlagt. Vorzugsweise werden auch die Bürstenköcher 11 und/oder die Befestigungslaschen 12 der Bürstenköcher 11 vom Luftstrom der Lüfterschaufeln 8 beaufschlagt. Die Richtung des Luftstroms kann sowohl auf diese Teile als auch von ihnen weg gerichtet sein. Es können auch undefinierte Turbulenzen erzeugt werden. Wenn alle oder manche der Befestigungslaschen 12 sich in unmittelbarer Nähe, dass heißt insbesondere mit im wesentlichen gleichem radialen Abstand zur Welle 2 wie die Lüfterschaufeln 8 und nur axial beabstandet zu diesen angeordnet sind, lassen sie sich besonders gut als Kühlelemente nutzen.

## Patentansprüche

1. Elektrische Maschine mit einer Anlaufscheibe (6), die auf einer Welle (2) zwischen einem Gleitlager (3) und einem von Bürsten (10) beaufschlagten, rotierenden elektrischen Kommutator (9) angeordnet ist, wobei die Anlaufscheibe (6) an dem Gleitlager (3) und dem Kommutator (9) anliegt, **dadurch gekennzeichnet, dass** am Außenumfang der Anlaufscheibe (6) Lüfterschaufeln (8) ausgebildet sind.

2. Elektrische Maschine nach Anspruch 1, **dadurch gekennzeichnet, dass** die Lüfterschaufeln (8) einen im wesentlichen axialen Luftstrom erzeugen.

3. Elektrische Maschine nach Anspruch 1 oder 2, **dadurch gekennzeichnet, dass** die Anlaufscheibe (6) eine Ölrückführ-Einrichtung (7) aufweist.

4. Elektrische Maschine nach einem der vorhergehenden Ansprüche, **dadurch gekennzeichnet, dass** die Anlaufscheibe (6) ein Kunststoff-Formteil ist.

5. Elektrische Maschine nach einem der vorhergehenden Ansprüche, **dadurch gekennzeichnet, dass** die Anlaufscheibe (6) auf der Welle (2) einen Presssitz hat.

6. Elektrische Maschine nach einem der vorhergehenden Ansprüche, **dadurch gekennzeichnet, dass** der Kommutator (9) vom Luftstrom der Lüfterschaufeln (8) beaufschlagt wird.

7. Elektrische Maschine nach einem der vorhergehenden Ansprüche, **dadurch gekennzeichnet, dass** die elektrische Maschine Bürstenköcher (11) und/oder Befestigungslaschen (12) der Bürstenköcher (11) aufweist, die vom Luftstrom der Lüfterschaufeln (8) beaufschlagt werden.

## Claims

1. Electrical machine having a thrust washer (6) which is arranged on a shaft (2) between a sliding bearing (3) and a rotating electrical commutator (9) which is acted on by brushes (10), with the thrust washer (6) bearing against the sliding bearing (3) and the commutator (9), **characterized in that** fan blades (8) are formed on the outer circumference of the thrust washer (6).

2. Electrical machine according to Claim 1, **characterized in that** the fan blades (8) generate a substantially axial air flow.

3. Electrical machine according to Claim 1 or 2, **characterized in that** the thrust washer (6) has an oil-return device (7).

4. Electrical machine according to one of the preceding claims, **characterized in that** the thrust washer (6) is a shaped plastic part.

5. Electrical machine according to one of the preceding claims, **characterized in that** the thrust washer (6) is press-fitted on the shaft (2).

6. Electrical machine according to one of the preceding claims, **characterized in that** the commutator (9) is acted on by the air flow from the fan blades (8).

7. Electrical machine according to one of the preceding claims, **characterized in that** the electrical machine has brush cartridges (11) and/or fastening lugs (12) of the brush cartridges (11), which are acted on by the air flow from the fan blades (8).

## Revendications

1. Machine électrique comportant un disque de démarrage (6) installé sur un arbre (2) entre un palier lisse (3) et un collecteur électrique (9) tournant, coopérant avec des balais (10),
le disque de démarrage (6) s'appliquant contre la palier lisse (3) et le collecteur (9),
**caractérisée en ce que**
la périphérie extérieure du disque de démarrage (6) comporte des pales de ventilateur (8).

2. Machine électrique selon la revendication 1,
**caractérisée en ce que**
les pales de ventilateur (8) génèrent un courant d'air pratiquement axial.

3. Machine électrique selon l'une des revendications 1 ou 2,
**caractérisée en ce que**
le disque de démarrage (6) comporte une installation de retour d'huile (7).

4. Machine électrique selon l'une quelconque des revendications précédentes,
**caractérisée en ce que**
le disque de démarrage (6) est une pièce moulée en matière plastique.

5. Machine électrique selon l'une quelconque des revendications précédentes,
**caractérisée en ce que**
le disque de démarrage (6) est monté sur l'arbre (2) par un siège pressé.

6. Machine électrique selon l'une quelconque des revendications précédentes,
**caractérisée en ce que**
le collecteur (9) est sollicité par le courant d'air généré par les pales de ventilateur (8).

7. Machine électrique selon l'une quelconque des revendications précédentes,
**caractérisée en ce que**
la machine électrique comporte un logement à balai (11) et/ou des pattes de fixation (12) pour le logement à balai (11), recevant le courant d'air des pales de ventilateur (8).
